# EUROPEAN PATENT SPECIFICATION

(11) **EP 2 747 967 B1**
(45) Date of publication and mention of the grant of the patent: **07.10.2015**
(21) Application number: 12825491.9
(22) Date of filing: 22.08.2012
(51) Int. Cl.: B28B 1/08, B28B 3/02, B28B 11/10, B28B 13/00

(54) **VACUUM VIBRATION PRESS FOR FORMING ENGINEERED COMPOSITE STONE SLABS**
VAKUUMVIBRATIONSPRESSE ZUM FORMEN MANIPULIERTER VERBUNDSTEINPLATTEN
PRESSE VIBRANTE À VIDE POUR LA FORMATION DE DALLES DE PIERRE COMPOSITE

(30) Priority: 23.08.2011 US 201161526308 P
(43) Date of publication of application: 02.07.2014
(73) Proprietor: Banus, Christopher T., Nashua, NH 03063 (US)
(72) Inventor: Banus, Christopher T., Nashua, NH 03063 (US)
(74) Representative: Fritz, Edmund Lothar
(86) International application number: PCT/US2012/051817
(87) International publication number: WO 2013/028736

(56) References cited:
- EP-A2- 1 262 295
- WO-A1-00/43192
- DE-A1- 2 437 411
- FR-A5- 2 069 651
- GB-A- 2 098 126
- GB-A- 2 127 343
- JP-A- H06 218 829
- JP-A- H09 155 824
- KR-A- 20000 012 935
- SU-A1- 742 130

## Description

### FIELD OF THE INVENTION

The invention relates to composite stone slabs, and more particularly, to a vacuum vibration press for making composite stone slabs with the features listed in the preamble of claim 1.

### BACKGROUND OF THE INVENTION

Manufactured composite stone slabs and tiles, which are sometimes referred to herein generically as "quartz slabs," have been produced since the mid 1980's. They typically include 90-93% stone content, with the remaining 7-10% being resin, pigment, and additives, which are sometimes generically referred to herein as "binder." The most commonly used method of producing manufactured stone slabs is generally referred to as the "Breton" method, or "Bretonstone," because the main supplier of the equipment that is used to make composite stone slabs is Breton Spa of Italy. In particular, the Breton Vacuum Vibration Press and copies thereof play a key role in the production of such stone slabs.

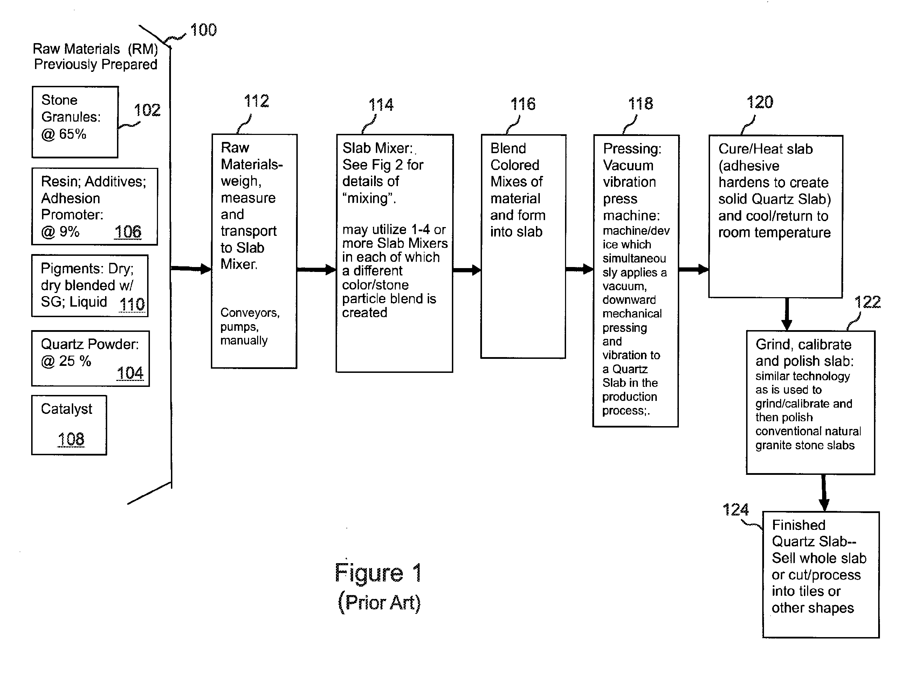

Figure 1 illustrates the basic steps used to manufacture stone slabs using the Breton method. First, the raw materials are prepared 100. Typically, this includes preparing a mixture containing about 65% stone granules 102 such as crushed quartz, granite, mirror, and/or glass in granule sizes from 0.2 mm up to 6mm or even 15mm. About 25 % "quartz powder" 104 is also included, where the term "quartz powder" generically refers to one or more powdered minerals such as silica and/or quartz, typically in an approximately minus 325 mesh (minus 45 micron) size. Finally, about 7 to 10% resin 106 is included, typically with additives such as catalyst 108, pigment blends 110, and dispersing media.

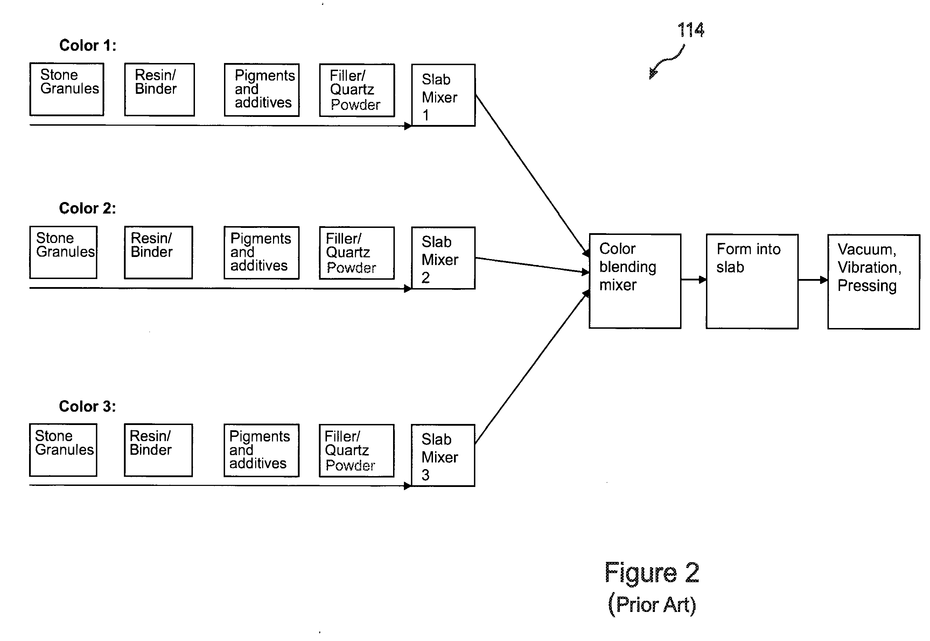

After the raw materials are weighed and measured, they are transported to a mixer 112 and mixed together 114. Typically, the mixer is charged with the stone granules, and then the resin and pigments are added and the combination is mixed until the particles and granules are fully wetted. For purposes of color design, two, three, or more mixers may be employed, each with a different color of raw materials and pigments. This is illustrated in Figure 2.

The quartz powder is then added while the mixing continues. When combined with the resin, the quartz powder forms a paste which serves as the binder between the stone granules. The mixed materials are then formed into a single slab 116, either in a rubber mold, a metal mold, or on a sheet of paper or other suitable carrier which can be used to transport the formed slab into the vacuum vibration press.

Once it has been transferred to the press, the formed slab is simultaneously evacuated, vibrated, and pressed 118 so as to compact the mixed material, remove air from the mixture so that there will be no voids in the finished slab, and make it flat. The mode and time of pressing also assist in creating the desired blending of the various materials and colors in the slab. The degree and intensity of the mixing, blending, and vibrating will all affect the color(s) and look(s) of the finished slab. An example of the parameters used in the pressing step 118 might be to:
- evacuate down to a pressure of 1.33 mbar-0.133 bar (1-100 torr);
- apply the press plate with a downward force of 0.689 mbar to 20.67 bar (0.01 to 300 psi);
- apply vibration having a frequency of about 1000-5000 rpm and an amplitude of 0.05 to 2 mm; and
- continue the above for between 20-280 seconds to produce a pressed, void-free slab.

Once the slab has been pressed, it is transported to an oven or to some other location for curing 120. Depending upon the adhesive (resin) used to bind the particles together into the slab, the curing and hardening process can take place at ambient temperature or at an elevated temperature, and can require from a few minutes up to many hours. After curing and hardening, the slab is returned to room temperature (if heat has been applied).

The cured slab is then ground and polished 122 to a desired thickness and finish, using technology similar to what is used to grind, calibrate, and then polish conventional natural granite stone slabs. The final result 124 is a finished quartz slab, also referred to as an engineered stone slab, a composite stone slab, a manmade stone slab, and other, similar expressions.

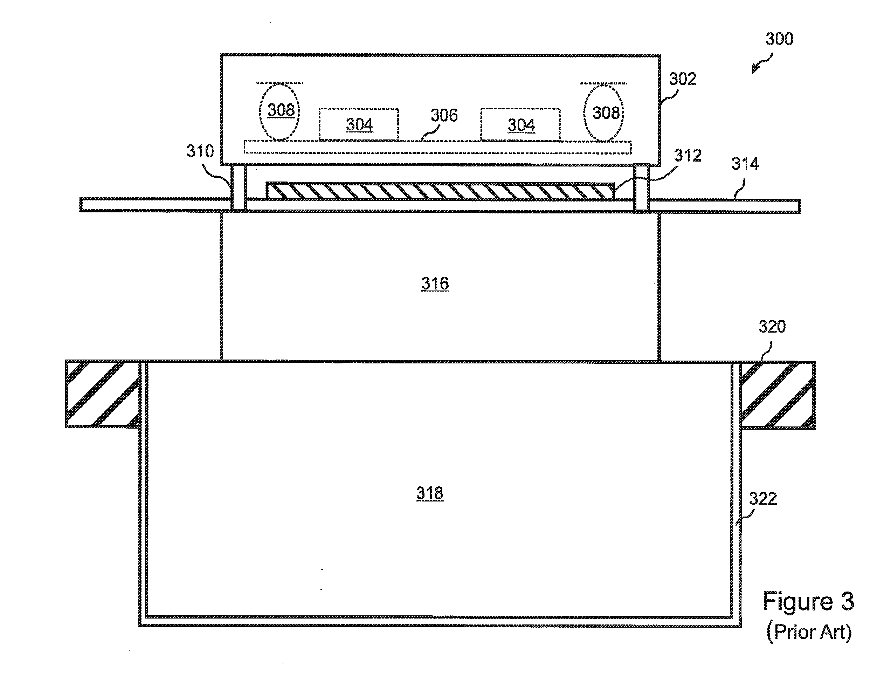

While the Breton press and the Breton process are effective, there are several disadvantages associated with the Breton style of pressing equipment and procedure, and with similar equipment and procedures marketed by other manufacturers. With reference to Figure 3, the Breton press 300 includes a press cover/vacuum chamber 302 which is also the housing for vibrating motors 304 mounted to a vibration plate 306 and suspended by air bags 308 or similar vibration mounts. The press cover 302 is mounted on pneumatic posts 310 so that it can be lowered onto a formed slab 312 which is typically brought into the press on a conveyer belt 314 running between the press cover and a press base 316. The Breton press 300 employs massive weight and power to simultaneously apply a vacuum, vibration, and downward pressure to the formed slab 312. The press cover 302 and included mechanisms 304, 306, 308 weigh about 6803.85 kg (15,000 pounds), and the press base 316 weighs about 13607.7 kg (30,000 pounds). Altogether, the Breton press 300 typically weighs from 22679.5 kg to 34019.2 kg (50,000 to 75,000 pounds). In addition, it must be anchored to a vibration-damped block 318 of concrete that is set beneath the concrete floor 320 and surrounded by a vibration isolating material 322. The block 318 is approximately 6.096 m (20') long by 4.572 m (15') wide by 4.572 m (15') deep and weighs another 100-300 tons.

Also, the steel vacuum chamber/press cover (302), which is typically shaped as a rectangular box, is massively built to withstand the vacuum force and the destructive long term effects of the vibration.

In addition, because the formed slab 312 is positioned on a solid base 316 that is bolted to a concrete block 318, which by itself weighs 13607.7 kg to 18143.6 kg (30,000 to 40,000 pounds), an enormous vibration force, about 74.5699 kW to 223.7097 kW (100 to 300 hp) at 1000 to 5000 rpm, must be applied so as to properly vibrate the slab. Essentially, to press and vibrate a quartz slab 312 weighing 181.43 kg -680.38 kg (400-1500 pounds), the Breton press 300 is required to vibrate a mechanism 302, 316 weighing 22679.5 kg to 34019.2 kg (50,000 to 75,000 pounds), plus the concrete block 318 it is bolted to. In addition, the press plate 306 that compresses the slab and the mount 308 for the vibrating motors are similarly massive.

Also, the vacuum vibration cycle time per slab for the Breton press 300 is about 70-200 seconds, which is time consuming, and the Breton-made press 300 costs about $6 to $7 million US dollars, which is very expensive.

GB 2 098 126 A describes a vacuum vibration press for forming composite stone slabs with a vacuum chamber and a pressing mechanism, wherein the material for the slab is filled into a mould box, which is placed onto rollers. The bottom of the mould box serves as a transport platform. When the rollers are moved downwards, the bottom of the mould box rests on fixed supports. The vacuum vibration press comprises a vibration device arranged on the upper side of a ram serving as the pressing mechanism. Both the pressing action as well as the vibration action is exerted by the same device. The vacuum chamber surrounds the pressing mechanism, the mould box and the transport platform.

What is needed, therefore, is a vacuum vibrating press which can apply vacuum, vibration, and pressure in amounts similar to a Breton press but with significantly lower cost of manufacture and vibrational energy requirements, and with shorter pressing times. The object of the present invention is to provide a vacuum vibration press, wherein the vibration table is connected to the support frame via a mechanism which allows the vibration table to move freely without transmitting excessive vibration to the support frame or to the vacuum chamber.

This object is solved by a vacuum vibration press according to the present invention with the features of claim 1.

### SUMMARY OF THE INVENTION

A vacuum vibration press for making composite stone slabs applies as much or more vibration and pressure to a formed quartz slab as a conventional Breton press, while weighing less, costing less to manufacture, providing shorter press cycle times, and requiring less energy consumption to vibrate the slab as compared to a Breton press. It is estimated that the press of the present invention can be manufactured at a cost of approximately $750,000 US dollars.

In embodiments, instead of a rectangular vacuum chamber with enormous strength and weight, the press of the present invention uses a light weight cylindrical chamber inside of which a vibration mechanism and slab support are suspended. In contrast to the traditional Breton press, the vacuum chamber of the present invention is not vibrated, but is actually isolated from all vibration. This approach makes it feasible to use any type of design and/or construction for the vacuum chamber, including lightweight cylindrical designs, and also rectangular and massive designs if so desired.

Instead of vibrating a 22679.5 kg - 34019.2 kg (50,000-75,000 pound) press and its 100+ ton base concrete block, requiring 74.5699 kW to 223.7097 kW (100-300 hp), the press of the present invention is only required to vibrate about 1360.7 kg to 2267.9 kg (3000 to 5000 pounds) of machinery and slab, which requires only about 11.185 kW to 18.642 kW (15 to 25 hp).

The portion of the press that is vibrated is referred to herein as the Vibration and Pressing Mechanism (VPM). The VPM is simple and light, comprising a Vibration Press Table Support Frame, or VPT-SF, a vibration table, a press plate and pressing mechanism, and one or more Vibration Devices (VD's).

The Vibration Press Table Support Frame (VPT-SF) is clamped or bolted to the inside of the vacuum chamber. The vibration table is connected to and raised up from the support frame with air springs, bags or another suitable mechanism which allows the vibration table to move freely without transmitting excessive vibration to the support frame or to the vacuum chamber. The press plate and pressing mechanism are supported above the formed slab, and are lowered, positioned precisely, and vibrated so as to accomplish the required compaction of the slab material components. The Vibration Devices (VD's) are mounted to the bottom of the press table and/or to the top of the press plate, and cause the quartz slab and the entire vibration press mechanism to vibrate, but do not cause the vacuum chamber to vibrate appreciably.

### Definitions of terms

Note that the following terms are used with the indicated definitions throughout this paper.

**Quartz Slabs:** This term refers generically to manmade composite stone slabs. Other terms which are used synonymously and interchangeably include: engineered stone slabs; agglomerated stone slabs; quartz slabs; composite stone or quartz slabs; manmade stone slabs; and agglomerated stone slabs.

**Stone Granules (SG):** This term refers generically to particles of stone (frequently quartz or silica based stone) or of other hard materials such as glass, granite, marble, and such like, having sizes in the range from about 200 microns up to 2-3 centimeters. The term is used interchangeably herein with the terms aggregates and granules.

**Quartz Powder (QP):** This term refers to powdered material ranging in size from about 1micron to about 300 microns. In the industry, the QP is commonly finely crushed and/or milled quartz or silica sand. The term is used interchangeably herein with the terms silica powder, quartz powder, and filler. It is readily available worldwide in a generally standard minus 325 mesh size, and can be made from marble (calcium carbonates), glass, granite, or any other material that can be powdered and used for making quartz slabs.

**Resin:** in the quartz slab industry the resin is, for economic reasons, typically a modified polyester thermosetting resin. The term resin is used throughout this paper to refer to any resin and/or adhesive system capable of adhering together the range of stone granules and quartz powder pieces that are used to form a quartz slab. Examples include epoxy, urethane, acrylic, vinyl ester, silicone resins, and even cementitious adhesives based on the various forms of hydraulic type cements. When the resin is a polyester material, then it may include various additives that affect the cure rate and especially the adhesion of the resin to silica and/or quartz based minerals and granites.

**Press:** This term is used herein to refer to any machine or device that can simultaneously apply a vacuum, a downward mechanical pressing, and vibration to a quartz slab during the production process. The term is used interchangeably herein with the terms vacuum vibration press and VVP.

**Pressing:** This term is used herein to refer to the process of simultaneously applying vacuum, downward pressure, and vibration at selected levels and intensities.

The present invention is a lightweight, energy efficient, low cost vacuum vibration press for forming composite stone slabs by simultaneously compressing and vibrating the slabs under vacuum. The press includes a vacuum chamber, a vibration table support frame fixed within the vacuum chamber, a vibration isolation system fixed to the vibration table support frame, a vibration table supported by the vibration isolation system, the vibration isolation system providing at least a partial vibration isolation between the vibration table support frame and the vibration table, a pressing mechanism that is configured to compress a slab mixture between the pressing mechanism and the vibration table at a pressure of between 0.0689 bar and 6.89 bar (1 and 100 psi), and at least one vibration device configured to vibrate at least one of the vibration table and the pressing mechanism. The vacuum chamber is configured so that it surrounds and encloses within its vacuum space the vibration table support frame, the vibration isolation system, the vibration table, the slab mixture, and the pressing mechanism.

Embodiments further include at least one vacuum pump suitable for evacuating the vacuum chamber.

Some embodiments further include a transport mechanism for transporting the slab mixture onto and off of the vibration table. In some of these embodiments, the transport mechanism includes a conveyor belt. In some of these embodiments, the vacuum chamber includes an upper section and a lower section, the upper and lower sections being separable to allow the conveyor belt to pass between the upper and lower sections so as to bring a slab mixture to the vibration table and remove a pressed slab from the vibration table, the upper and lower sections being sealable so as to form a seal that enables evacuation of the chamber during pressing of the slab mixture. And in some of these embodiments, the conveyor belt is wider than the vacuum chamber, and the seal is formed between the upper and lower sections and the conveyor belt.

In various embodiments the vibration isolation mechanism includes at least one of air bags and springs.

Some embodiments further include at least one vacuum volume reduction block within the vacuum chamber, the vacuum volume reduction block being configured to fill space within the vacuum chamber so as to reduce an evacuation volume that is subject to evacuation during pressing of the slab mixture.

Other embodiments further include at least one space-adjusting mechanism that is configured to enable precise adjustment of a spacing between the pressing mechanism and a slab mixture supported by the vibration table, said precise adjustment resulting in a pressed composite stone slab having a uniform thickness across its length and width. In some of these embodiments the space adjusting mechanism includes a screw jack. In some of these embodiments the screw jack is assisted by a pressing device in creating a downward pressure on the pressing mechanism. And in some of these embodiments the pressing device includes at least one of an air bag, an air cylinder, and a spring.

In certain embodiments the vibration device is able to apply vibration to the vibration table at a frequency between 100 rpm and 5000 rpm, and at an amplitude between 0.001 and 3mm length. And in some of these embodiments the vibration device is driven by a force that is at least one of pneumatic, electrical, magnetic, and hydraulic.

In various embodiments the vibration device includes an ultrasonic transducer that is able to apply vibration to at least one of the vibration table and the pressing mechanism at a frequency between 1000 Hz and 5 MHz. And in some of these embodiments the vibration device is able to apply both mechanical vibrations and ultrasonic vibrations to at least one of the vibration table and the pressing mechanism.

In certain embodiments the vibration device is able to apply vibration with respect to a plane of the slab mixture in a vibration mode and direction that is at least one of one of vertical and linear, vertical and circular, horizontal and linear, and horizontal and circular.

In embodiments a plurality of vibration devices is attached to one of the vibration table and the pressing mechanism, the vibration devices being synchronized in frequency, phase, and amplitude so as to apply vibration at a common frequency and phase and a uniform amplitude over the slab mixture. In some of these embodiments a first plurality vibration devices is attached to the vibration table, and a second plurality of vibration devices is attached to the pressing mechanism. In some of these embodiments the first plurality and the second plurality are synchronous in frequency and phase. In other of these embodiments the first plurality and the second plurality are synchronous in frequency and 180° out of phase. In still other of these embodiments the first plurality and the second plurality are synchronous in frequency and 90° out of phase. In yet other of these embodiments the first plurality and the second plurality are synchronous in frequency and out of phase by an angle that is not 180° and is not 90°. In still other of these embodiments the first plurality and the second plurality vibrate at different frequencies. In yet other of these embodiments the first plurality and the second plurality vibrate at different amplitudes. In still other of these embodiments at least one of the first plurality and the second plurality is able to apply mechanical vibrations. And in yet other of these embodiments at least one of the first plurality and the second plurality is able to apply ultrasonic vibrations.

The features and advantages described herein are not all-inclusive and, in particular, many additional features and advantages will be apparent to one of ordinary skill in the art in view of the drawings, specification, and claims. Moreover, it should be noted that the language used in the specification has been principally selected for readability and instructional purposes, and not to limit the scope of the inventive subject matter.

### BRIEF DESCRIPTION OF THE DRAWINGS

Figure 1 is a flow diagram illustrating the overall production process for making composite stone slabs according to the traditional Breton process of the prior art;
Figure 2 is a flow diagram illustrating the mixing and combining of a plurality of powder, stone particles, and other components having different colors and/or other differing properties, according to the traditional Breton process of the prior art;
Figure 3 is a cross-sectional illustration of a traditional Breton press of the prior art;
Figure 4A is a side view of a vacuum chamber in an embodiment of the present invention that includes hinged doors on its ends;
Figure 4B is an end view of the vacuum chamber of Figure 4A;
Figure 5A is a top view of a split vacuum chamber in an embodiment of the present invention showing a conveyor belt wider than the vacuum chamber and passing between the split sections of the vacuum chamber;
Figure 5B is a side view of the split vacuum chamber of Figure 5A;
Figure 6A is a cross-sectional end view of an embodiment of the present invention showing the press mechanism within the vacuum chamber;
Figure 6B is a cross-sectional view of the embodiment of Figure 6A;
Figure 6C is a close-up cross-sectional view of the embodiment of Figure 6B showing a support mechanism suspending the press table above the press support frame;
Figure 6D is a top view of the press plate of Figure 6A illustrating support of the press plate by a plurality of screw jacks;
Figure 6E is a side view of the press plate of Figure 6D;
Figure 6F is a close-up cross-sectional view of a screw jack and air bag supporting a press plate in an embodiment similar to the embodiment of Figure 6A;
Figure 7 is a cross-sectional end view of the embodiment of Figure 6A showing only the vacuum volume reduction blocks within the vacuum chamber;
Figure 8A is a cross-sectional side view showing composite slabs being delivered to and removed from a vacuum chamber of an embodiment by a conveyor belt; and
Figure 8B is a cross-sectional side view showing composite slabs being delivered to and removed from a vacuum chamber of an embodiment in separate trays on rollers.

### DETAILED DESCRIPTION

The present invention is a vacuum vibration press for making composite stone slabs, wherein the pressing and vibrating mechanisms are contained within the vacuum chamber, so that there is no need for a massively reinforced vacuum chamber and no need to vibrate the vacuum chamber together with the formed slab. The invention applies as much or more vibration and pressure to a formed quartz slab as a conventional Breton press, while weighing less, costing less to manufacture, providing shorter press cycle times, and requiring less energy consumption to vibrate the slab as compared to a Breton press.

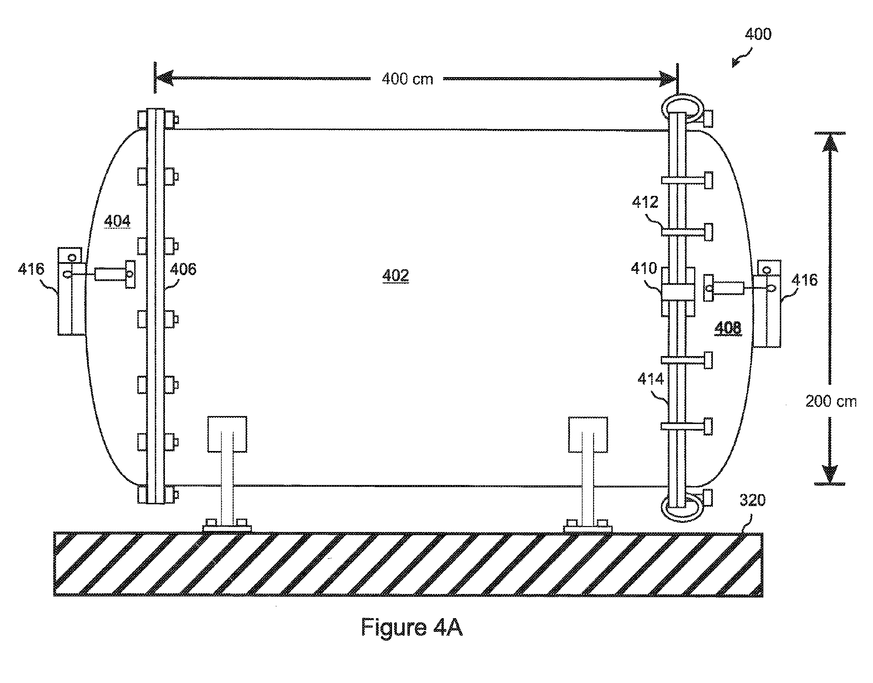

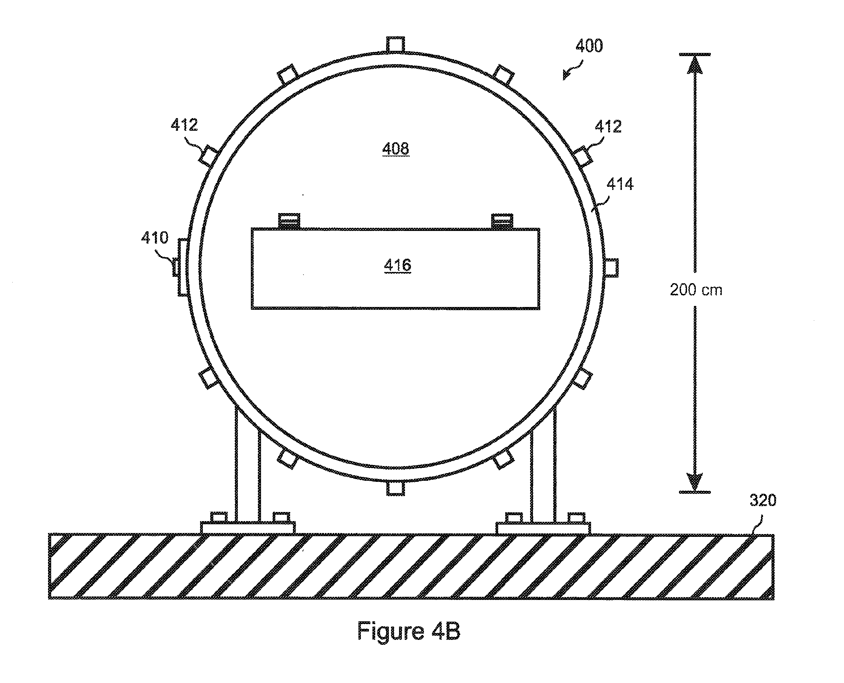

With reference to Figures 4A and 4B (side and end views, respectively), instead of a rectangular vacuum chamber with enormous strength and weight, the present invention uses, in embodiments, a light weight cylindrical chamber 400 inside of which the vibration mechanism and slab support are suspended. In the embodiment of Figures 4A and 4B, the vacuum chamber includes a cylindrical section 402 terminated at one end by an end cap 404 that is bolted 406 in place and at the other end by an end cap 408 that is hinged 410 and held in place by clamps 412 attached to a flange 414. Both end caps 404, 408 include hinged doors 416 through which a formed slab 312 can be inserted into the press. Because the vacuum chamber itself 400 is not vibrated, in contrast with the traditional Breton type press 300, and is actually isolated from all vibration, virtually any type of design or construction for the vacuum chamber 400 can be used, even a rectangular and massive chamber if so desired.

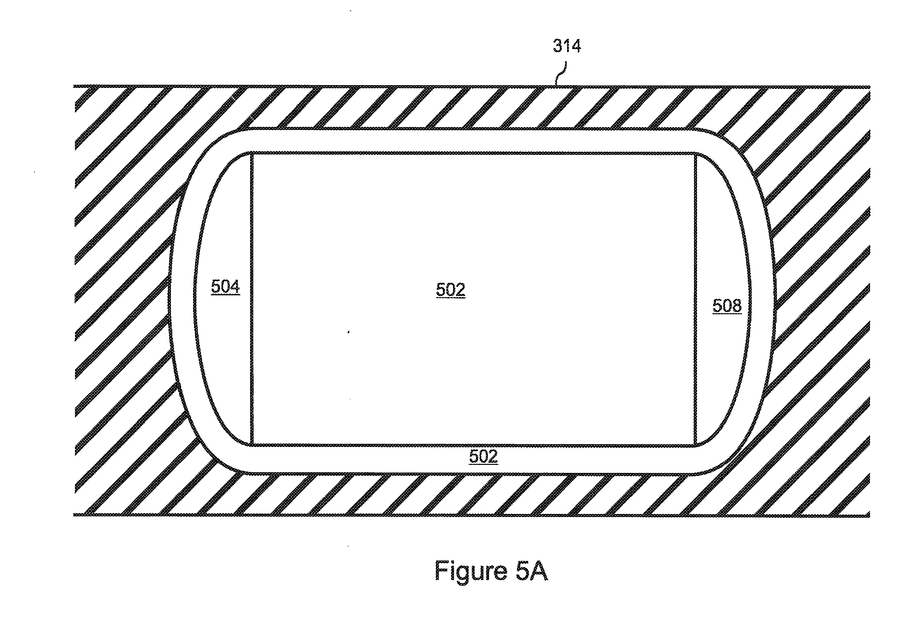

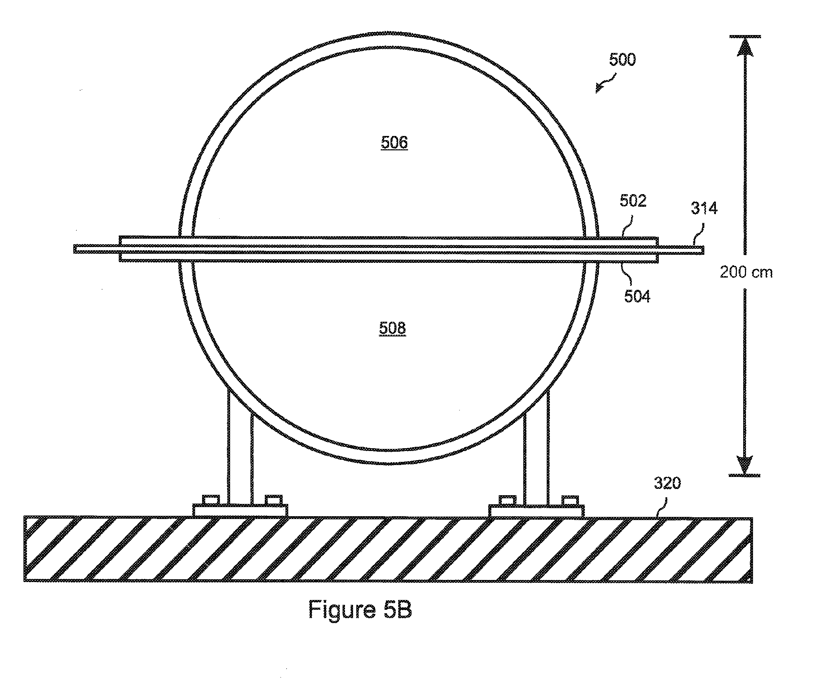

Figures 5A and 5B are top and side views, respectively, of an embodiment that includes a horizontally split vacuum chamber 500 which forms a vacuum seal between the vacuum chamber 500 and a conveyor belt 314, the conveyor belt being wider than the vacuum chamber 500 itself. The conveyor belt 314 passes between an upper flange 502 and a lower flange 504 of the vacuum chamber 500 so as to convey a formed slab 312 between an upper half of the vacuum chamber 506 and a lower half of the vacuum chamber 508.

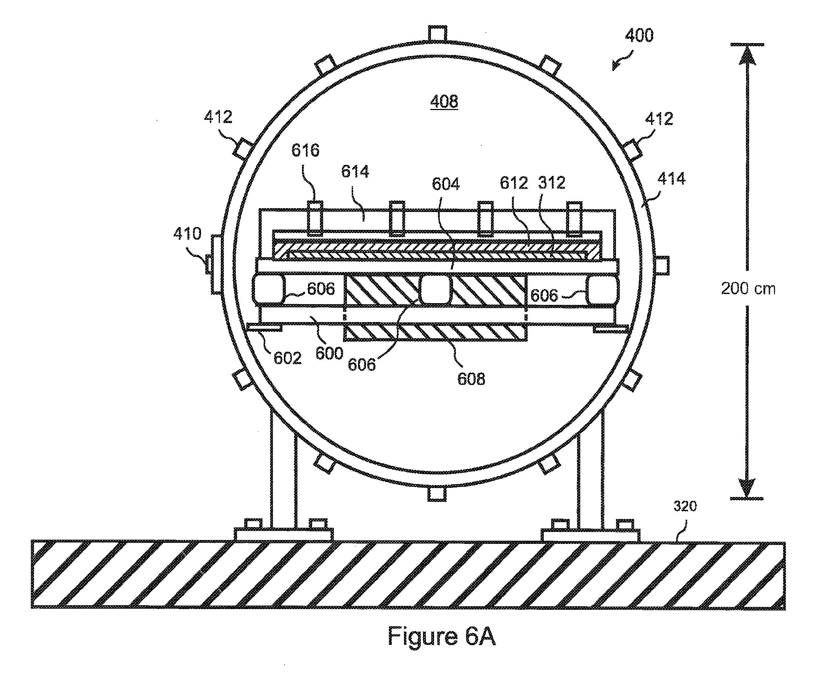

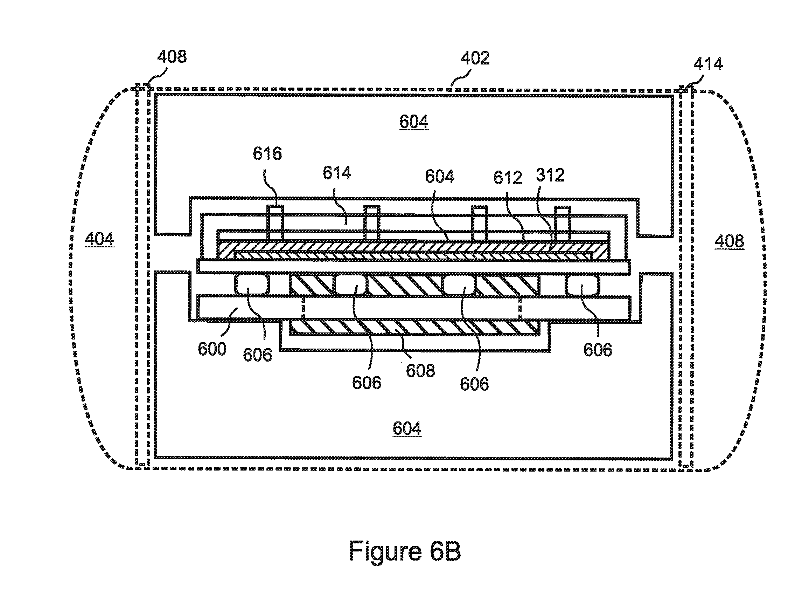

With reference to Figures 6A and 6B, instead of vibrating a 22679.5 kg to 34019.2 kg (50,000-75,000 pound) press 302, 316 and its 100+ ton base concrete block 318, requiring 74.5699 kW to 223.7097 kW (100-300 hp), the press 400 of the present invention is only required to vibrate about1360.7 kg to 2267.9 kg (3000 to 5000 pounds) of machinery and slab, referred to herein as the Vibration and Pressing Mechanism or VPM, which requires only about 11.185 kW to 18.642 kW (15 to 25 hp). The VPM is relatively simple and light, and includes the following elements.

A Vibration Press Table Support Frame- (VPT-SF) 600 is clamped or bolted by tank support brackets 602 to the inside of the vacuum chamber 408, which is cylindrical in the embodiment of Figures 6A and 6B. The VPT-SF 600 can be accessed inside the chamber 408 by removing the Vacuum Volume Reduction Blocks (VVRB) 604, or by unclamping, unbolting, and sliding it out of the chamber through the hinged tank head end cap (416 of Figures 4A and 4B). In similar embodiments, the VPT-SF can be slid or rolled out from inside the chamber for maintenance purposes, which greatly reduces maintenance times.

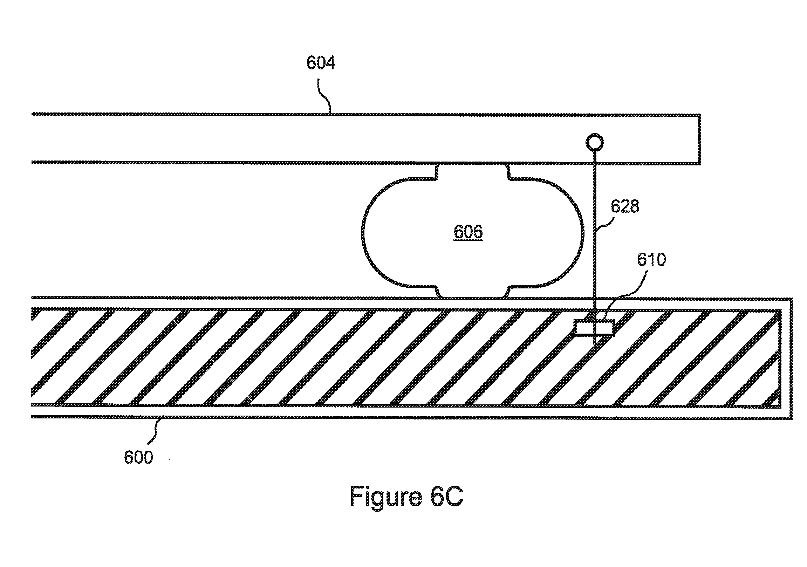

A vibrating table 604 is connected and suspended above the support frame 600 by air springs and/or bags 606 with appropriate height restraint and leveling devices (628 in Figure 6C) to maintain levelness and proper working height. In the embodiment of Figure 6C, the leveling device includes a metal rod or chain 628 and a height adjusting mechanism 610. In other embodiments, instead of air springs and bags, mechanical springs or another suitable mechanism is used which allows the vibration table 604 to move freely enough for the vibration mode selected and without transmitting excessive vibration to the support frame 600 and vacuum chamber 408.

A press plate 612 and pressing mechanism 614 are supported above the formed slab 312 and are lowered, positioned precisely, and vibrated to accomplish the required compaction of the slab material components.

The Vibration Devices (VD) 608, which can be either traditional mechanical vibration devices (driven by pneumatic, electrical, magnetic, hydraulic, or any other power source that creates mechanical vibration of frequency approximately 100-5000 rpm and amplitude of approximately 0.001 to 1mm length) and/or ultrasonic transducers (frequency approximately 1000 - 5 MHz), are mounted to the bottom of the press table 604 and/or to the top of the press plate 612.

With respect to the plane of the slab 312 itself, the vibration mode can be vertical/linear, vertical/circular, horizontal/linear, horizontal/circular, or any combination thereof. The VD's cause the quartz slab 312 and the entire vibration press mechanism (only about 1360.7 kg to 2267.9 kg (3000 - 5000 pounds) of mechanism) to vibrate, but do not cause the vacuum chamber 400 to vibrate appreciably.

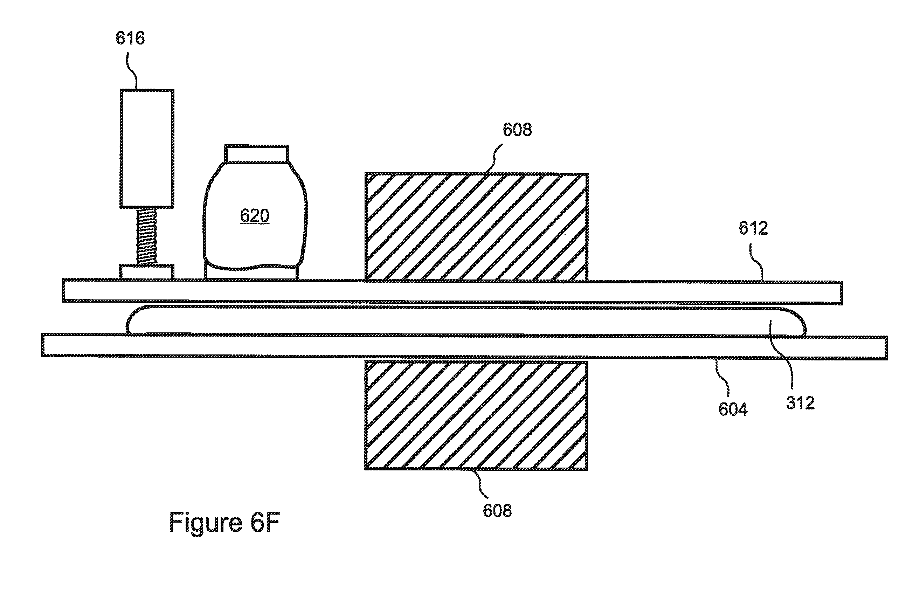

Depending on the dimensions of the slab to be pressed, in some embodiments a plurality of VD's 608 are mounted either to the bottom of the press table 604 or to the top of the press plate 612, or both (as shown in Figure 6F). In these embodiments, the VD's are synchronized electronically and/or mechanically so that all of the VD's vibrate in phase with one another, both in amplitude and in frequency, causing the plurality of VD's to act as one large vibration device.

In embodiments where a first group of VD's is attached to the bottom of the press table 604 and a second group of VD's is attached to the top of the press plate 612, each group of VD's is synchronized to vibrate in phase both in amplitude and in frequency within the group. The two groups can be synchronized with each other in any of several ways, including
- phase and frequency synchronized, so that both the press table 604 and the press plate 612 rise and fall at same time;
- frequency synchronized in opposite phase, so that the press table 604 rises when the press plate 612 falls and vice-versa, thereby periodically and simultaneously "pressing" against the quartz slab 304;
- frequency synchronized and 90° out of phase, so that as the press plate 612 is going down, the press table 604 is moving laterally;
- frequency synchronized and with some other phase offset;
- frequency un-synchronized, i.e. the two groups operating at different frequencies;
- operating at different amplitudes, so that the vibration applied by the VD's of the first group to the press table is at a different amplitude from the vibration applied by the VD's of the second group to the press plate; and
- any combination of the above.

Note that embodiments of the present invention apply both mechanical and/or ultrasonic vibrations using any of these combinations of VD's and combinations of phase, frequency, and amplitude synchronization.

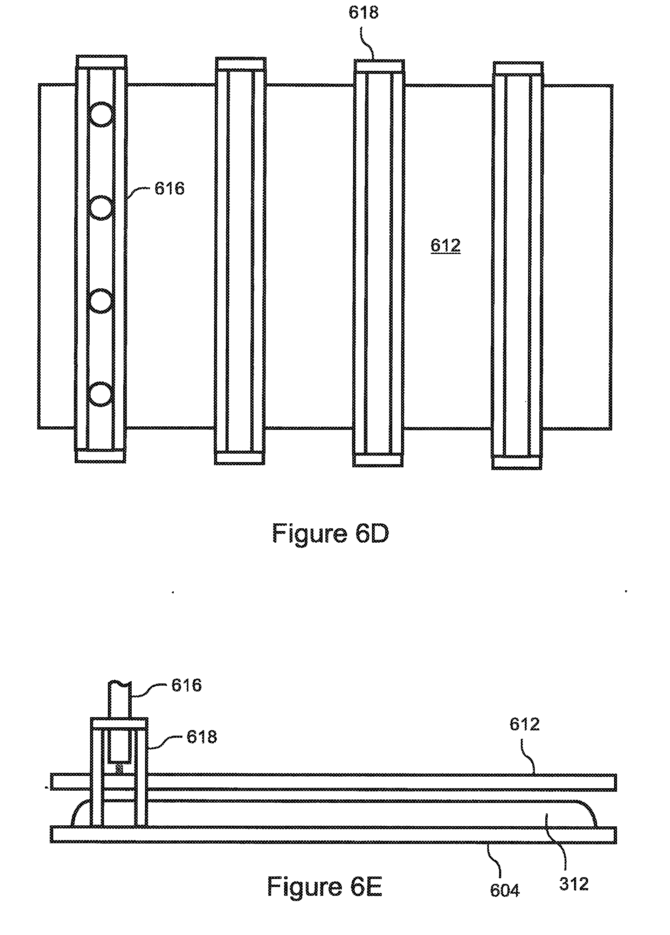

With reference to Figures 6D and 6E, embodiments of the present invention employ precision screw jacks 616 attached to press screw supports 618 to lower the press plate 612 and apply pressing force on the formed slab 312 during vibration. Figure 6D is a top view of a press plate 612 suspended by a plurality of screw jacks 616 attached to a plurality of press screw supports 618. Figure 6E is a side view of the press plate 612, screw jacks 616 and press screw supports 618 of Figure 6D. In embodiments, the screw jacks 616 can be controlled to lower the press plate 612 at a variable and defined rate of decent to a proper thickness position which will allow the slab material to move or migrate across the slab area, resulting in a very even thickness across the entire slab area. With reference to Figure 6F, the pressing force of the positioning screw jacks 616 can be augmented with the force of air springs, air bags 620, or other pneumatic or hydraulic pressing devices. In some embodiments, the pressing force is sensed and regulated, either by sensing the pressure in the air bags 620 or by another sensing method, and the positioning of the screw jacks 616 is controlled so as to maintain the press plate 612 parallel to the press table 604.

Because of this method of lowering and positioning the vibrating press plate 612, embodiments of the present invention allow slabs to be produced with less thickness variance from side to side or end to end then for traditional Breton presses 300, thereby reducing the average amount of material that must be used to produce a slab of given finished thickness after grinding. The traditional press technology suspends and lowers the press plate 306 with large air bags and/or air springs 308 and without precision screw jacks 616, and therefore the levelness and paralellness of the press plate 306 relative to the press base 316 on which the formed slab 312 rests, is determined only by the levelness of the distribution of the slab material 312 that has been spread in the slab forming process. Therefore, uneven spreading results in uneven slab thickness from end to end or side to side, which means that to maintain a given finished and post calibration slab thickness, the average formed slab thickness before grinding must be greater, and this increases the average amount of slab material (and therefore the cost) of the slab for any given final thickness.

In some embodiments, ultrasonic vibration is applied to the pressing plate 612, the vibration press table 600, 604, or both, which can substantially reduce the pressing cycle time. This is economically possible due to the light weight of the slab support 600, 604 and vibration mechanism 608.

In operating a traditional Breton press 300, a significant percentage of the pressing cycle time is devoted to evacuating the vacuum chamber to below 0.133 bar (100 Torr), and in some cases even down as low as 1.33 mbar-6.65 mbar (1-5 Torr). The volume of the vacuum chamber is a big factor in determining this time. This is one of the reasons for the choice of a low-volume rectangular vacuum chamber for the Breton machine, which of necessity requires massively thick and heavy walls to withstand the vacuum and the vibration.

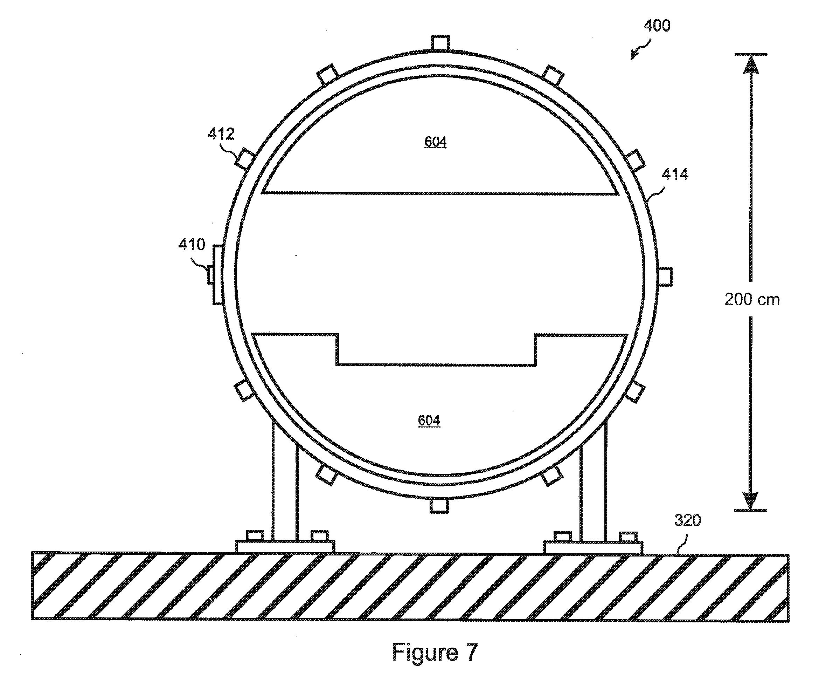

In embodiments of the present invention, the press uses a lightweight cylindrical vacuum chamber 402 which would normally have a huge interior volume and which would therefore require either massive vacuum pumps or long press cycle times to evacuate. This large chamber volume problem is eliminated by the use of vacuum volume reduction blocks VVRB 604. These are lightweight blocks 604 made from a material such as urethane or another foam, balsa wood, expanded cell plastic, metal, or any other suitable material, which can withstand the vacuum without distending or expanding, and which can effectively and substantially reduce the volume of the vacuum chamber 402 and thereby shorten the press cycle time. An end view showing the VVRB blocks 604 is presented in Figure 7. The vibration and pressing mechanisms have been omitted from Figure 7 for clarity of illustration.

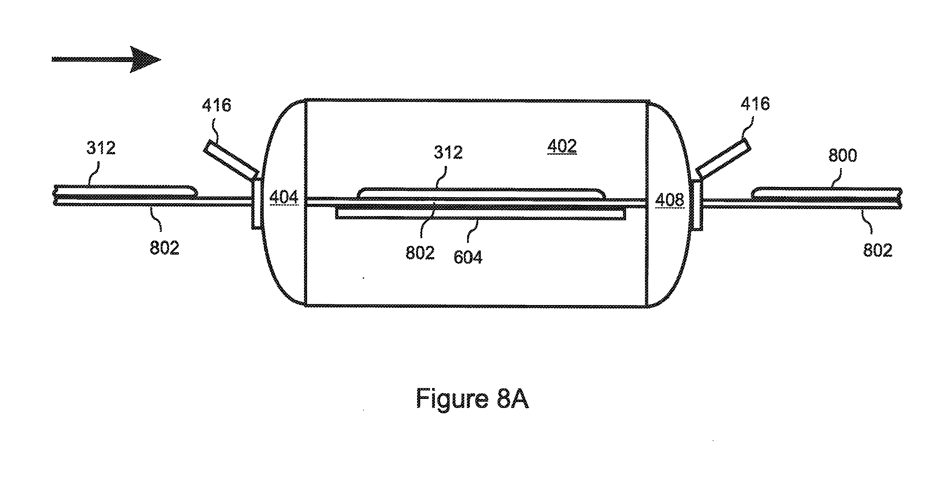

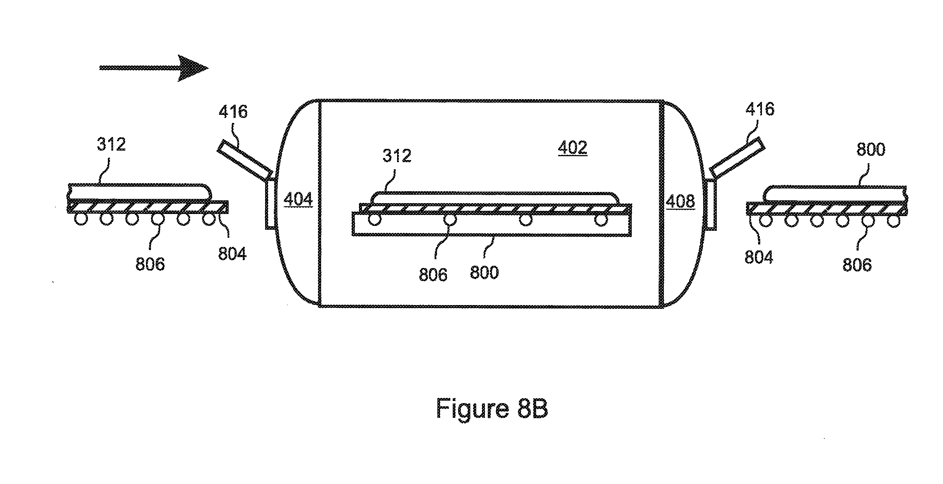

With reference to Figures 8A and 8B, embodiments of the present invention are configured to accept formed slabs 312 and removed finished composite stone slabs 800 via any of several methods. These include slabs 312 carried on a continuous sheet of paper or metal on a conveyor belt 802, slabs 312 contained in rubber trays 804 carried on a conveyor belt 802, and slabs 312 located on individual trays or molds 804 of any appropriate material which arrive and depart on rollers 806 or on a conveyor belt 802.

The foregoing description of the embodiments of the invention has been presented for the purposes of illustration and description. It is not intended to be exhaustive or to limit the invention to the precise form disclosed. Many modifications and variations are possible in light of this disclosure. It is intended that the scope of the invention be limited not by this detailed description, but rather by the claims appended hereto.

## Claims

1. A lightweight, energy efficient, low cost vacuum vibration press for forming composite stone slabs by simultaneously compressing and vibrating the slabs under vacuum, the press comprising:
a vacuum chamber (400);
a vibration table support frame (600) fixed within the vacuum chamber (400);
a vibration table (604)
a pressing mechanism (614) that is configured to compress a slab mixture (312) between the pressing mechanism (614) and the vibration table (604) at a pressure of between 0.0689 bar and 6.89 bar (1 and 100 psi); and at least one vibration device (608) configured to vibrate at least one of the vibration table (604) and the pressing mechanism (614);
the vacuum chamber (400) being configured so that it surrounds and encloses within its vacuum space the vibration table support frame (600), the vibration table (604), the slab mixture (312), and the pressing mechanism (614),
**characterized in that a** vibration isolation system (606) is fixed to the vibration table support frame (600);
the vibration table (604) being supported by said vibration isolation system (606),
said vibration isolation system (606) providing at least a partial vibration isolation between the vibration table support frame (600) and the vibration table (604);
the vacuum chamber (400) being configured so that it also surrounds and encloses within its vacuum space said vibration isolation system (606).

2. The press of claim 1, further comprising a transport mechanism (802) for transporting the slab mixture (312) onto and off of the vibration table (604).

3. The press of claim 1, further comprising at least one vacuum volume reduction block within the vacuum chamber (400), the vacuum volume reduction block being configured to fill space within the vacuum chamber (400) so as to reduce an evacuation volume that is subject to evacuation during pressing of the slab mixture.

4. The press of claim 1, further comprising at least one space-adjusting mechanism that is configured to enable precise adjustment of a spacing between the pressing mechanism (612, 614) and a slab mixture (312) supported by the vibration table (604), said precise adjustment resulting in a pressed composite stone slab having a uniform thickness across its length and width.

5. The press of claim 1, wherein the vibration device is able to apply vibration to the vibration table (604) at a frequency between 100 rpm and 5000 rpm, and at an amplitude between 0.001 and 3mm length.

6. The press of claim 1, wherein the vibration device (608) includes an ultrasonic transducer that is able to apply vibration to at least one of the vibration table (604) and the pressing mechanism (612, 614) at a frequency between 1000 Hz and 5 MHz.

7. The press of claim 1, wherein the vibration device (608) is able to apply both mechanical vibrations and ultrasonic vibrations to at least one of the vibration table and the pressing mechanism (612, 614).

8. The press of claim 1, wherein the vibration device (608) is able to apply vibration with respect to a plane of the slab mixture in a vibration mode and direction that is at least one of one of vertical and linear, vertical and circular, horizontal and linear, and horizontal and circular.

9. The press of claim 1, wherein a first plurality vibration devices (608) is attached to the vibration table (604), and a second plurality of vibration devices (608) is attached to the pressing mechanism (612, 614).

10. The press of claim 1, wherein the first plurality and the second plurality are synchronous in frequency and phase.

11. The press of claim 1, wherein the first plurality and the second plurality are synchronous in frequency and 180" out of phase or are synchronous in frequency and 90" out of phase or are synchronous in frequency and out of phase by an angle that is not 180" and is not 90".

12. The press of claim 1, wherein the first plurality and the second plurality vibrate at different frequencies.

13. The press of claim 1, wherein the first plurality and the second plurality vibrate at different amplitudes.

14. The press of claim 1, wherein compressing the slab mixture into a void-free slab requires a vibrational energy of only about 11.185 KW (15 hp) to 18.642 kW (25hp).

## Patentansprüche

1. Eine leichtgewichtige, energieeffiziente kostengünstige Vakuumvibrationspresse für die Herstellung von Komposit-Steinplatten durch simultanes Zusammenpressen und Vibrieren der Platten unter Vakuum, wobei die Presse umfasst:
eine Vakuumkammer (400);
einen Vakuumtischtragrahmen (600), festgelegt innerhalb der Vakuumkammer (400);
einen Vibrationstisch (604);
einen Pressmechanismus (614), der so konfiguriert ist, dass er eine Plattenmischung (312) zwischen dem Pressmechanismus (614) und dem Vibrationstisch (604) bei einem Druck von zwischen 0.0689 bar und 6.89 bar (1 und 100 psi) zusammenpresst; und
wenigstens eine Vibrationsvorrichtung (608), die so konfiguriert ist, dass sie von Vibrationstisch (604) und Pressmechanismus (614) wenigstens einen vibriert;
wobei die Vakuumkammer (400) so konfiguriert ist, dass sie innerhalb ihres Vakuumraums den Vibrationstischtragrahmen (600), den Vibrationstisch (604), die Plattenmischung (312) und den Pressmechanismus (614) umgibt und einschließt,
**dadurch gekennzeichnet, dass** ein Vibrationsisolationssystem (606) an dem Vibrationstischtragrahmen (600)befestigt ist;
dass der Vibrationstisch (604) von diesem Vibrationsisolationssystem (606) getragen wird,
dass dieses Vibrationsisolationssystem (606) wenigstens eine teilweise Vibrationsisolation zwischen dem Vibrationstischtragrahmen (600) und dem Vibrationstisch liefert (604);
wobei die Vakuumkammer (400) so konfiguriert ist, dass sie in ihrem Vakuumraum auch das Vibrationsisolationssystem (606) umgibt und einschließt.

2. Die Presse gemäß Anspruch 1, welche weiterhin einen Transportmechanismus (802) für den Transport der Plattenmischung (312) auf den Vibrationstisch (604) und von diesem weg umfasst.

3. Die Presse gemäß Anspruch 1, welche weiterhin wenigstens einen Vakuumvolumenreduzierblock innerhalb der Vakuumkammer (400) umfasst, wobei der Vakuumvolumenreduzierblock so konfiguriert ist, den Raum innerhalb der Vakuumkammer (400) so zu füllern, dass das Evakuierungsvolumen, welches während des Pressens der Plattenmischung evakuiert wird, reduziert wird.

4. Die Presse gemäß Anspruch 1, weiterhin umfassend wenigstens einen Abstandeinstellmechanismus, der konfiguriert ist, um eine präzise Einstellung des Abstands zwischen dem Pressmechanismus (612, 614) und einer Plattenmischung (312), getragen von dem Vibrationstisch (604), zu ermöglichen, wobei diese genaue Einstellung zu einer gepressten Kompositsteinplatte führt, die eine einheitliche Dicke über ihre Länge und ihre Breite aufweist.

5. Die Presse nach Anspruch 1, bei der die Vibrationsvorrichtung in der Lage ist, Vibrationen auf den Vibrationstisch (604) mit einer Frequenz von zwischen 100 rpm und 5000 rpm, und bei einer Amplitude zwischen 0.001 und 3mm Länge auszuüben.

6. Die Presse nach Anspruch 1, bei der die Vibrationsvorrichtung (608) einen Ultraschallwandler umfasst, welcher in der Lage ist, Vibrationen auf wenigstens einen von Vibrationstisch (604) und Pressmechanismus (612, 614) bei einer Frequenz zwischen 1000 Hz und 5 MHz auszuüben.

7. Die Presse nach Anspruch 1, bei der die Vibrationsvorrichtung (608) in der Lage ist, sowohl mechanische als auch Ultraschallvibrationen auf wenigstens einen von Vibrationstisch und Pressmechanismus (612, 614) auszuüben.

8. Die Presse nach Anspruch 1, bei der die Vibrationsvorrichtung (608) in der Lage ist, Vibrationen im Hinblick auf eine Ebene der Plattenmischung in einem Vibrationsmodus und einer Vibrationsrichtung auszuüben, die wenigstens eine ist ausgewählt aus vertikal und linear, vertikal und zirkular, horizontal und linear und horizontal und zirkular.

9. Die Presse gemäß Anspruch 1, bei der eine erste Mehrzahl von Vibrationsvorrichtungen (608) an dem Vibrationstisch (604) angebracht ist und eine zweite Mehrzahl von Vibrationsvorrichtungen (608) an dem Pressmechanismus (612, 614) angebracht ist.

10. Die Presse nach Anspruch 1, bei der die erste Mehrzahl und die zweite Mehrzahl in Frequenz und Phase synchron sind.

11. Die Presse nach Anspruch 1, bei der die erste Mehrzahl und die zweite Mehrzahl synchron in der Frequenz und 180 " aus der Phase sind oder synchron in der Frequenz und 90 " aus der Phase sind oder synchron in der Frequenz und aus der Phase bei einem Winkel, der nicht 180 " und nicht 90 " ist.

12. Die Presse nach Anspruch 1, bei der die erste Mehrzahl und die zweite Mehrzahl mit unterschiedlichen Frequenzen vibrieren.

13. Die Presse nach Anspruch 1, bei der die erste Mehrzahl und die zweite Mehrzahl mit unterschiedlichen Amplituden vibrieren.

14. Die Presse nach Anspruch 1, bei der das Zusammenpressen der Plattenmischung in eine hohlraumfreie Platte eine Vibrationsenergie von nur etwa 11.185 kW (15hp) bis 18.642 kW (25 hp) erfordert.

## Revendications

1. Presse de vibration sous vide légère, à faible consommation d'énergie et économique pour former des dalles en pierre composites par la compression et la vibration simultanées des dalles sous vide, la presse comprenant
une chambre sous vide (400) ;
un châssis de support de table de vibration (600) fixé à l'intérieur de la chambre sous vide (400) ;
une table de vibration (604) ;
un mécanisme de pression (614) qui est configuré pour compresser un mélange de dalles (312) entre le mécanisme de pression (614) et la table de vibration (604) à une pression entre 0,0689 bar et 6,89 bars (1 et 100 psi) ; et au moins un dispositif de vibration (608) configuré pour faire vibrer au moins l'un de la table de vibration (604) et du mécanisme de pression (614) ;
la chambre sous vide (400) étant configurée de manière à entourer et à renfermer, à l'intérieur de son espace sous vide, le châssis de support de table de vibration (600), la table de vibration (604), le mélange de dalles (312), et le mécanisme de pression (614),
**caractérisée en ce qu'**un système d'isolation de vibration (606) est fixé au châssis de support de table de vibration (600) ;
la table de vibration (604) étant supportée par ledit système d'isolation de vibration (606), ledit système d'isolation de vibration (606) fournissant au moins une isolation de vibration partielle entre le châssis de support de table de vibration (600) et la table de vibration (604) ;
la chambre sous vide (400) étant configurée de manière également à entourer et à renfermer à l'intérieur de son espace sous vide ledit système d'isolation de vibration (606).

2. Presse selon la revendication 1, comprenant en outre un mécanisme de transport (802) pour transporter le mélange de dalles (312) sur la table de vibration (604) et hors de celle-ci.

3. Presse selon la revendication 1, comprenant en outre au moins un bloc de réduction de volume sous vide à l'intérieur de la chambre sous vide (400), le bloc de réduction de volume sous vide étant configuré pour remplir un espace à l'intérieur de la chambre sous vide (400) de manière à réduire un volume d'évacuation soumis à une évacuation au cours d'une pression du mélange de dalles.

4. Presse selon la revendication 1, comprenant en outre au moins un mécanisme d'ajustement d'espace qui est configuré pour permettre un ajustement précis d'un espacement entre le mécanisme de pression (612, 614) et un mélange de dalles (312) supporté par la table de vibration (604), ledit ajustement précis engendrant une dalle de pierre composite pressée ayant une épaisseur uniforme sur toute sa longueur et sur toute sa largeur.

5. Presse selon la revendication 1, dans laquelle le dispositif de vibration est apte à appliquer une vibration à la table de vibration (604) à une fréquence entre 100 tr/mn et 5000 tr/mn, et à une amplitude entre 0,001 et 3 mm de longueur.

6. Presse selon la revendication 1, dans laquelle le dispositif de vibration (608) comprend un transducteur ultrasonique qui est apte à appliquer une vibration à au moins l'un de la table de vibration (604) et du mécanisme de pression (612, 614) à une fréquence entre 1000 Hz et 5 MHz.

7. Presse selon la revendication 1, dans laquelle le dispositif de vibration (608) est apte à appliquer à la fois des vibrations mécaniques et des vibrations ultrasoniques à au moins l'un de la table de vibration et du mécanisme de pression (612, 614).

8. Presse selon la revendication 1, dans laquelle le dispositif de vibration (608) est apte à appliquer une vibration par rapport à un plan du mélange de dalles dans un mode de vibration et un sens qui est au moins l'un de vertical et linéaire, vertical et circulaire, horizontal et linéaire, et horizontal et circulaire.

9. Presse selon la revendication 1, dans laquelle une première pluralité de dispositifs de vibration (608) est attachée à la table de vibration (604), et une seconde pluralité de dispositifs de vibration (608) est attachée au mécanisme de pression (612, 614).

10. Presse selon la revendication 1, dans laquelle la première pluralité et la seconde pluralité sont synchrones en fréquence et en phase.

11. Presse selon la revendication 1, dans laquelle la première pluralité et la seconde pluralité sont synchrones en fréquence et déphasées de 180 degrés ou sont synchrones en fréquence et déphasées de 90 degrés ou sont synchrones en fréquence et déphasées d'un angle qui n'est pas de 180 degrés et qui n'est pas de 90 degrés.

12. Presse selon la revendication 1, dans laquelle la première pluralité et la seconde pluralité vibrent à des fréquences différentes.

13. Presse selon la revendication 1, dans laquelle la première pluralité et la seconde pluralité vibrent à des amplitudes différentes.

14. Presse selon la revendication 1, dans laquelle la compression du mélange de dalles en une dalle dépourvue de vide nécessite une énergie vibratoire seulement d'environ 11,185 kW (15 chevaux) à 18,642 kW (25 chevaux).
